**Europäisches Patentamt**

**European Patent Office**

**Office européen des brevets**

(11) Veröffentlichungsnummer : **0 517 229 A1**

(19)

(12) **EUROPÄISCHE PATENTANMELDUNG**

(21) Anmeldenummer : **92109495.9**

(22) Anmeldetag : **04.06.92**

(51) Int. Cl.$^5$ : **E02D 31/00, B09B 1/00**

(30) Priorität : **05.06.91 DE 4118447**

(43) Veröffentlichungstag der Anmeldung :
**09.12.92 Patentblatt 92/50**

(84) Benannte Vertragsstaaten :
**AT BE CH DE ES FR GB IT LI NL SE**

(71) Anmelder : **Philipp Holzmann AG**
**Taunusanlage 1**
**W-6000 Frankfurt 1 (DE)**

(71) Anmelder : **FLACHGLAS CONSULT GMBH**
**Haydnstrasse 19**
**W-4650 Gelsenkirchen (DE)**

(72) Erfinder : **Wind, Heinz, Dipl.-Ing.**
**Kiefernweg 10**
**W-6242 Kronberg (DE)**
Erfinder : **Kallinich, D., Dipl.-Ing.**
**Parkstrasse 20**
**W-4650 Gelsenkirchen (DE)**
Erfinder : **Kahlert, W., Dipl. rer. nat.**
**Hochstrasse 77**
**W-4620 Castrop-Rauxel (DE)**
Erfinder : **Stegmar, Rainer, Prof.R.-Ing.**
**Avenariusstrasse 13d**
**W-2000 Hamburg 55 (DE)**

(74) Vertreter : **Melzer, Wolfgang, Dipl.-Ing.**
**Patentanwälte Dipl.-Ing. H. Mitscherlich**
**Dipl.-Ing. K. Gunschmann Dipl.-Ing. Dr.rer.nat.**
**W. Körber Dipl.-Ing. J. Schmidt-EversDipl.-Ing.**
**W. Melzer Steinsdorfstrasse 10**
**W-8000 München 22 (DE)**

(54) **Deponie-Abdichtung.**

(57) Es wird eine Deponie-Abdichtung angegeben, bei der zwischen den Dichtungslagen ($3_1,3_2$...) einer mineralischen oder künstlich aufbereiteten Dichtungsschicht bei einer Basis-Abdichtung eine Zwischenschicht vorgesehen ist, die aus nebeneinander angeordneten Glaselementen (4) besteht. Die Glaselemente (4) benachbarter Zwischenschichten sind fugenversetzt angeordnet und/oder die Fugen zwischen den Glaselementen (4) einer Zwischenschicht sind mittels Dichteinrichtungen gegeneinander abgedichtet. Zusätzlich ist eine Abdeckung der Fugen (7) möglich. Der gleiche grundsätzliche Gedanke ist auch bei einer Oberflächen-Abdichtung für eine Deponie anwendbar.

## FIG. 1

EP 0 517 229 A1

Die Erfindung betrifft eine Deponie-Abdichtung gemäß dem Oberbegriff des Anspruchs 1, 3 und/oder 11.

Aus ökologischen Gründen kommt dem Aufbau einer Deponie erhebliche Bedeutung zu. Insbesondere ist es wichtig, Boden und Grundwasser vor einer im Untergrund sich ausbreitenden und durch den Menschen hervorgerufenen Verschmutzung zu schützen. Das Eindringen von Schadstoffen in den Untergrund kann bei einer Deponie dadurch verhindert werden, daß Abdichtungsschichten vorgesehen werden, und zwar insbesondere eine Basis-Abdichtung, auf der die Deponie errichtet wird und einer Oberflächenabdichtung nach dem Verfüllen der Deponie. Dabei ist zu beachten, daß die Basis und insbesondere die Oberfläche einer Deponie Setzungen und Setzungsunterschieden unterworfen sind. Ferner besteht die Ansicht, daß die Wasserpermeabilität der Oberflächen-Abdichtung niedriger sein muß als die der Basis-Abdichtung. Schließlich ist zu beachten, daß Deponien auf Dauer, gegebenenfalls für mehrere 1000 Jahre, angelegt werden und die für die Abdichtung verwendeten Materialien daher über längere Zeit keinen Alterungserscheinungen unterliegen dürfen, die den Dichtungszweck beeinträchtigen. Als Abdichtungsbaustoffe haben sich daher mineralische insbesondere tonhaltige Erdstoffe sowie Kunststoffdichtungsbahnen durchgesetzt, die auch gemeinsam in Form einer Kombinationsdichtung verwendet werden können (vgl. hierzu Beton-Kalender 1991, Kapitel 9.1 "Deponietechnik").

Üblicherweise wird auf einem Untergrund ein Planum mit Hilfe einer Ausgleichsschicht erreicht. Auf dieser werden mehrere Lagen einer mineralischen Dichtungsschicht, bestehend aus bindigen Erdstoffen, Betonen und Gemischen aus Tonen, Schluffen, Sanden und Kiesen, aus betonmehlverbesserten natürlichen Erdstoffen oder aus in Dosier- und Mischanlagen rezeptmäßig aus Einzel-Erdstoffkomponenten aufgebauten Gemischen verwendet. Auf dieser mineralischen Dichtungsschicht wird eine weitere Schutzschicht, beispielsweise eine Kunststoffdichtungsbahn angeordnet. Auf dieser wird eine Dränschicht angeordnet, die Drainagerohre aufweist. Erst hierauf wird der in der Deponie zu deponierende Abfall angeordnet. Nach vollständiger Füllung der Deponie wird diese an ihre Oberfläche in in wesentlichen ähnlicher Weise abgedichtet. Insbesondere wird gegebenenfalls kombiniert mit einer Kunststoffdichtungsbahn eine mindestens eine Lage aufweisende mineralische Dichtungsschicht in ähnlicher Weise vorgesehen. Hierbei haben sich üblicherweise tonhaltige mineralische Materialien durchgesetzt.

Aufgrund der gegebenen Materialien ist eine 100%ige Dichtung nicht gewährleistet. Außerdem kann es zu Verwerfungen und Verformungen kommen. Schließlich bereitet die Aufbringung der verschiedenen Lagen der Dichtungsschichten technische Schwierigkeiten, da die Aufbringung der Schichten mittels Großmaschinen zu erfolgen hat, jedoch in der Dicke der einzelnen Lagen nur geringfügige Schwankungen zugelassen sein sollen.

Ausgehend hiervon ist es Aufgabe der vorliegenden Erfindung die Durchlässigkeit der mineralischen Dichtungsschicht weiter zu verringern.

Die Erfindung geht von der Erkenntnis aus, daß dies nur mittels Maßnahmen erfolgen kann, bei denen ähnliches Alterungsverhalten zu erwarten ist.

Die Erfindung wird bei einer Basis-Abdichtung durch die kennzeichnenden Merkmale des Anspruches 1 bzw. des Anspruches 3 gelöst und durch die Merkmale des Anspruches 2 bzw. des Anspruches 4 weitergebildet.

Weiterbildungen der Basis-Abdichtung ergeben sich aus den Ansprüchen 5 bis 10.

Die Aufgabe wird ferner bei einer Oberflächen-Abdichtung durch die kennzeichnenden Merkmale des Anspruchs 11 gelöst.

Weiterbildungen der Oberflächen-Abdichtung finden sich in den Ansprüchen 12 bis 20.

Als Glaselemente können dabei Glasscheiben beliebiger Form, vorzugsweise jedoch innerhalb einer Deponie stets gleicher Form verwendet werden, insbesondere Glasscheiben mit einem gleichmäßigen Polygonzug entsprechendem Umfang wie Rechtecke, Sechsecke und dgl..

Die Erfindung wird anhand der in der Zeichnung dargestellten Ausführungsbeispiele näher erläutert. Es zeigen:

Fig. 1 Im Schnitt eine Basis-Abdichtung gemäß der Erfindung;

Fig. 2 schematisch im Aufsicht eine Darstellung des gegenseitigen Versatzes der Glaselemente benachbarter Zwischenschichten;

Fig. 3 in Detailansicht eine Fuge zwischen benachbarten Glaselementen einer Zwischenschicht;

Fig. 4 eine Ausführungsform einer Abdeckung der Fugen benachbarter Glaselemente;

Fig. 5 eine andere Ausführungsform der Fugen-Abdeckung;

Fig. 6 in Aufsicht eine Anordnung von Glaselementen für eine Oberflächen-Abdichtung;

Fig. 7 einen Schnitt durch die Anordnung gemäß Figur 6;

Fig. 8 eine dachziegelförmige Anordnung der Glaselemente bei der Oberflächen-Abdichtung im Schnitt;

Fig. 9 eine Einzelheit bei einer anderen Ausführungsform einer dachziegelförmigen Anordnung;

Fig. 10 in Seitenansicht und

Fig. 11 in Aufsicht eine beispielhafte Deponie in Übersicht.

Auf einem gegebenenfalls grob gestalteten Untergrund 1 ist eine Ausgleichsschicht 2 vorgesehen, um ein möglichst ebenes Planum einer Deponie-Basis zu erreichen. Auf dieser sind mehrere Lagen $3_1, 3_2$... einer mineralischen Dichtungsschicht bestehend aus natürlichen oder künstlich aufbereiteten Erdstoffen vorgesehen. Derartige rezeptmäßig aus Einzel-Erdstoffkomponenten aufgebaute Gemische sind in der Literatur mehrfach beschrieben. Allgemein werden sie in mehreren Lagen $3_1, 3_2, 3_3$... aufgebracht, die eine Lagendicke in der Größenordnung von 0,25 m besitzen, wobei die einzelen Lagen darüber hinaus verdichtet sind. Durch die Mehrlagigkeit soll zum einen eine sorgfältige Verdichtung ermöglicht werden und darüber hinaus eine gute Verformbarkeit und Scherfestigkeit gewährleistet werden. Auf dieser mehrlagigen mineralischen Dichtungsschicht ist eine Schutzschicht 5 vorgesehen, auf der wiederum eine übliche Abdeckung wie eine Drän-oder Filterschicht 6 vorgesehen ist. Erst auf dieser wird der Abfall (nicht dargestellt) eingetragen.

Gemäß der Erfindung ist zwischen den einzelnen Lagen $3_1, 3_2$... der mineralischen Dichtungsschicht eine Zwischenschicht vorgesehen, die aus nebeneinander angeordneten Glaselementen 4 besteht. Auch die Schutzschicht 5 kann durch eine solche Anordnung gebildet sein. Sie kann auch wie herkömmlich durch eine Kunststoffdichtungsbahn oder eine Textilbahn wie eine Geotextilbahn gebildet sein.

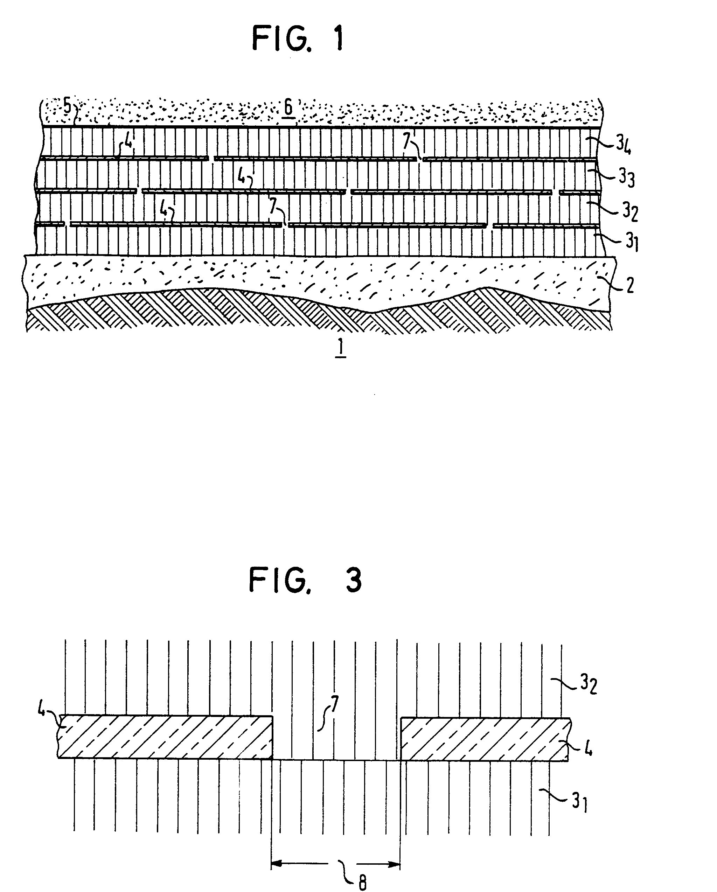

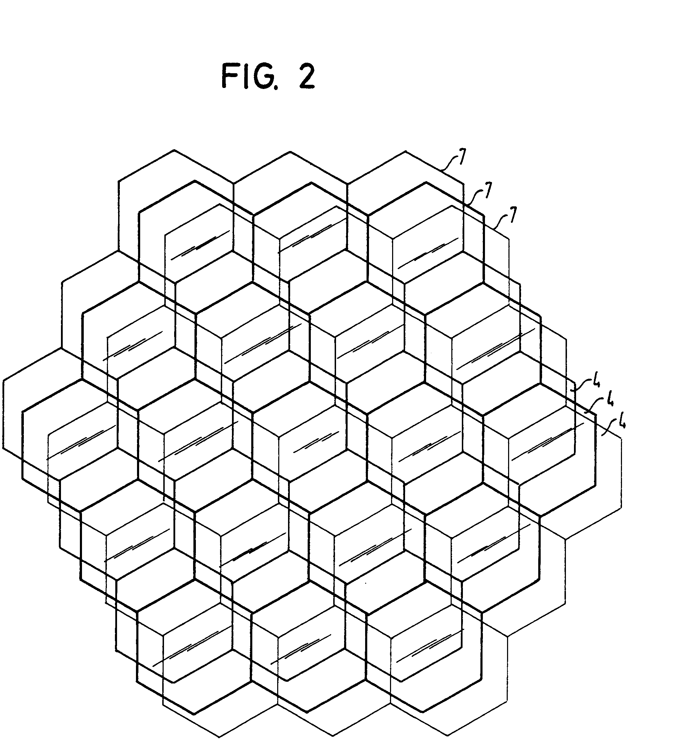

Wie sich aus Figur 1 bereits ergibt, sind die Fugen 7 zwischen den Glaselementen 4 einer Zwischenschicht gegenüber denjenigen einer benachbarten Zwischenschicht versetzt angeordnet. Figur 2 zeigt in Übereinanderprojektion, daß dieser Fugenversatz für alle Fugen 7 einer Zwischenschicht gilt. Figur 2 zeigt nämlich schematisch in Projektion die Fugen zwischen benachbarten Glaselementen von drei aufeinanderfolgenden Zwischenschichten, wobei hier die Glaselemente 4 waben- oder sechseckig im Umriß gestaltet sind.

Die Verwendung der Glaselemente 4 garantiert unbegrenzte Haltbarkeit. Zwar wird die Dichtigkeit in Bereich der Fugen 7 unterbrochen, jedoch entsteht durch den Fugenversatz in den benachbarten Zwischenschichten ein Labyrinthsystem, bei dem aufgrund der langen Wege und der bereits sehr geringen Durchlässigkeit der einzelnen Lagen $3_1, 3_2$... die Gesamtdurchlässigkeit sehr stark reduziert wird. Der eine Abdichtung kennzeichnende Wasserdurchlässigkeitsbeiwert k ist daher verschwindend gering.

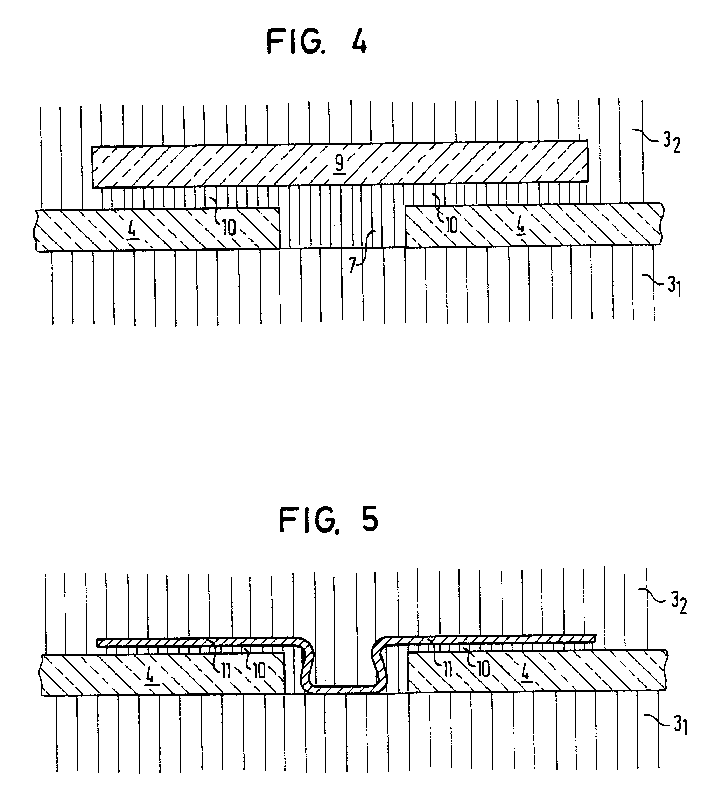

Die Breite 8 der Fugen 7 (Fig. 3) ist dabei entsprechend den zu erwartenden Verformungen bei der Verfüllung der Deponie bemessen. Gegebenenfalls ist auch das Untergrundverhalten zu berücksichtigen. Die Fuge 7 kann dabei durch den gleichen Stoff wie der, der bei den einzelnen Dichtungslagen verwendet ist, ausgefüllt werden. Es kann aber auch eine etwas andere Materialmischung verwendet werden, insbesondere und vorzugsweise ein plastischer Ton oder eine andere diffusionsdichte und verformbare Dichtungsmasse 10 (Fig. 4 und 5). Eine weitere Erhöhung des Labyrintheffektes kann erreicht werden, wenn darüber hinaus über den Fugen 7 zusätzliche Abdeckungen vorgesehen sind, wie etwa die Abdeckungen 9 aus Glas in Fig. 4 oder die Abdeckungen 11 aus verformtem Kunststoff oder korrosionsfestem Metallblech in Fig. 5.

Hervorzuheben ist darüber hinaus, daß die Qualität der zwischen den Glaselementen 4 eingefaßten plastischen Tonschichten sich nicht ändert. Durch das dauerhafte Verformungsvermögen der die Fugen 7 ausfüllenden Schichten 10 ist die Gewähr gegeben, daß mögliche Undichtigkeiten durch plastisches Fließen sich selbstheilend schließen. Deshalb wird plastisches Tonmaterial insbesondere dann verwendet, wenn eine reine mineralische Lage $3_1, 3_2$... verwendet wird, da diese sich im Laufe der Zeit durch Austrocknen erheblich verändern kann, was bei Verformungsänderungen in Folge der Schüttvorgänge zu Rissen im Außenbereich der Dichtmassen und damit zu Durchtrittsöffnungen führt.

Das gleiche Prinzip ist im Grundsatz nach auch bei Oberflächen-Abdichtungen verwendbar. Der Aufbau einer Oberflächen-Abdichtung ist ähnlich dem einer Basis-Abdichtung, wobei die Schichten in zeitlich umgekehrter Reihenfolge aufgetragen werden, so daß die mineralische Dichtungsschicht weitgehend außenliegt und üblicherweise auf dieser der kulturfähige Boden aufgebracht wird.

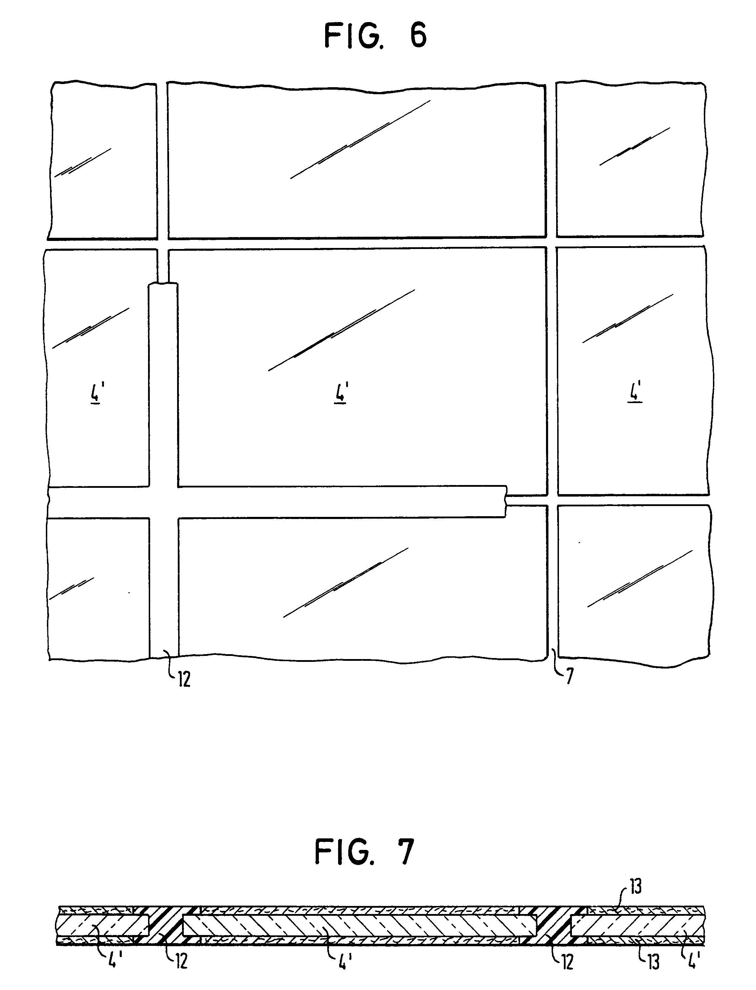

Wie in Fig. 6 dargestellt, können die einzelnen Glaselemente 4', die hier rechteckig sind, in gleicher Weise nebeneinnander auf einer mineralischen Dichtungslage angeordnet werden, wobei ebenfalls Fugen gebildet sind. Die Fugen 7 sind zweckmäßig bei der Oberflächen-Abdichtung mittels eines Profils, insbesondere eines PE-Profils 12, abgedichtet. Um insbesondere ein Abrutschen bei geneigter Anordnung der Glaselemente 4' zu vermeiden, erfolgt die Anordnung zweckmäßigerweise auf einer Gewebeschicht 13, wobei eine solche auch auf den Glaselementen 4' angeordnet wird, um die darauf aufgebrachten Materialien an einem Abrutschen zu hindern. Das Profil 12 und die Gewebeschicht 13 können dabei miteinander integriert ausgebildet sein.

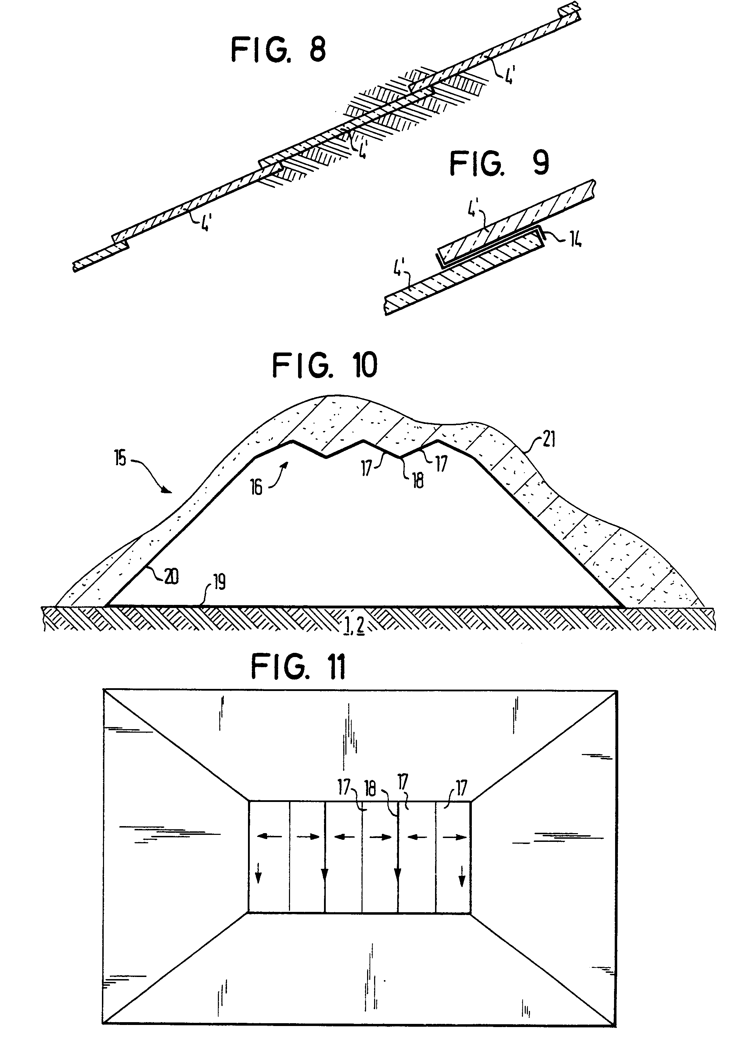

Statt eines solchen Profils 12 kann auch eine überlappende Anordnung gewählt werden. Gemäß Fig. 8 ist eine dachziegelartige Anordnung vorgesehen. Wie sich aus Fig. 9 ergibt, kann zur Abstützung sich gegenseitig überlappender Glaselemente 4' ein Halterungselement 14, wie ein Winkelblech oder dgl., vorgesehen sein.

Die Fig. 10 und 11 zeigen den grundsätzlichen Aufbau einer Deponie, und zwar in Form einer Halden-Deponie. Jedoch ist die Anordnung auch bei anderen Deponiearten wie Hang- oder Grubendeponien grundsätzlich verwendbar. Ferner sind im gegebenen Fall (nicht dargestellt) Entgasungsbrunnen herauszuführen.

Die Fig. 10 und 11 zeigen grundsätzlich eine Deponie 15 mit einer Basis-Abdichtung 19 und einer Oberflächenabdichtung 20. Im Bereich eines waagerechten Abschnittes 16 einer Deponie-Oberfläche ist eine Profilierung durchgeführt, nämlich ein Dachprofil 17 in Querrichtung und zusätzlich ein Dachprofil 18 in Längsrichtung, derart, daß bevorzugte Ablaufrichtungen für Regenwasser geschaffen sind, um hierdurch das Einsickern noch weiter zu erschweren. Darüber hinaus kann die übliche nachträgliche Gestaltung 21 nach verfüllter Deponie vorgesehen sein. Wie sich insbesondere aus Fig. 11 ergibt, ist eine möglichst geometrische Gestaltung der Deponie vorzuziehen, da hierdurch die Verlegungsarbeit der Glaselemente 4,4' erleichtert ist, jedoch ist eine Verlegung der Glaselemente 4,4' auch bei nicht geometrischer Ausbildung möglich. Eine solche geometrische Ausbildung ist in einfacher Weise erreichbar, da zunehmend mehr und mehr biologisch weitgehend stabilisierter Restabfall zu Würfeln gepreßt im Oberflächenbereich eingebracht wird.

Durch die Erfindung wird eine dauerhaft und funktionstüchtige und den hohen Sicherheitsanforderungen gerecht werdende Deponie-Abdichtung sowohl für die Basis als auch für die Oberfläche erzielt, die durch die Verbindung von Glasbeständigkeit mit dem Tragverhalten und den Dichtungseigenschaften mineralischen Mineralien bewirkt wird.

Hierdurch kann durch eine über sehr lange Zeiträume wirksame Abdichtung auch für Hausmüll- und Sonderabfalldeponien erzielt werden.

**Patentansprüche**

1. Deponie-Abdichtung, bei der die Basis-Abdichtung (19) mehrere übereinander angeordnete mineralische oder künstlich aufbereitete Dichtungslagen ($3_1, 3_2$...) aufweist,
dadurch **gekennzeichnet,**
daß zwischen den Dichtungslagen ($3_1, 3_2$...) jeweils eine Zwischenschicht vorgesehen ist, die aus nebeneinander angeordneten Glaselementen (4) besteht, und daß die Glaselemente (4) benachbarter Zwischenschichten fugenversetzt angeordnet sind.

2. Deponie-Abdichtung nach Anspruch 1,
dadurch **gekennzeichnet,**
daß die Fugen (7) zwischen den Glaselementen (4) einer Zwischenschicht mittels Dichteinrichtungen gegeneinander abgedichtet sind.

3. Deponie-Abdichtung, bei der die Basis-Abdichtung mehrere übereinander angeordnete mineralische oder künstlich aufbereitete Dichtungslagen ($3_1, 3_2$...) aufweist,
dadurch **gekennzeichnet,**
daß zwischen den Dichtungslagen ($3_1, 3_2$...) eine Zwischenschicht vorgesehen ist, die aus nebeneinander angeordneten Glaselementen (4) besteht, und daß die Fugen (7) zwischen den Glaselemente (4) einer Zwischenschicht mittels Dichteinrichtungen gegeneinander abgedichtet sind.

4. Deponie-Abdichtung nach Anspruch 3,
dadurch **gekennzeichnet,**
daß die Glaselemente (4) benachbarter Zwischenschichten fugenversetzt angeordnet sind.

5. Deponie-Abdichtung nach Anspruch 2 oder 3,
dadurch **gekennzeichnet,**
daß die Fugen (7) durch eine Ton- oder Mineralmasse (10) zumindest teilweise ausgegossen sind.

6. Deponie-Abdichtung nach Anspruch 2, 3 oder 6,
dadurch **gekennzeichnet,**
daß die Fugen (7) durch eine Abdeckung abgedeckt sind.

7. Deponie-Abdichtung nach Anspruch 6,
dadurch **gekennzeichnet,**
daß die Abdeckung (9) aus Glas besteht.

8. Deponie-Abdichtung nach Anspruch 6,
dadurch **gekennzeichnet,**
daß die Abdeckung (11) aus verformtem Kunststoff oder korrosionsfestem Metallblech besteht.

9. Deponie-Abdichtung nach einem der Ansprüche 1 bis 8,
dadurch **gekennzeichnet,**
daß die Breite (8) der Fugen (7) entsprechend der zu erwartenden Verformungen bei der Verfüllung der Deponie (15) gewählt ist.

10. Deponie-Abdichtung nach Anspruch 9,
dadurch **gekennzeichnet,**
daß das Verhalten des Deponie-Untergrundes (1,2) berücksichtigt ist.

11. Deponie-Abdichtung, insbesondere nach einem der Ansprüche 1 bis 10, bei der die Oberflächen-Abdichtung (20) mindestens eine mineralische oder künstlich aufbereitete Dichtungslage aufweist,
dadurch **gekennzeichnet,**
daß auf der Dichtungslage eine Schicht aus im wesentlichen nebeneinander angeordneten Glaselementen (4') vorgesehen ist.

12. Deponie-Abdichtung nach Anspruch 11,
dadurch **gekennzeichnet,**
daß Fugen zwischen den Glaselementen (4') mittels einer Dichteinrichtung gegeneinander abgedichtet sind.

13. Deponie-Abdichtung nach Anspruch 12,
dadurch **gekennzeichnet** ,
daß die Dichteinrichtung durch ein Profil (12) wie
einem PE-Profil gebildet ist.

14. Deponie-Abdichtung nach Anspruch 11,
dadurch **gekennzeichnet** ,
daß die Glaselemente (4') dachziegelartig einander übergreifend verlegt sind.

15. Deponie-Abdichtung nach Anspruch 14,
dadurch **gekennzeichnet** ,
daß im Übergreifungsbereich Halterungen (14)
vorgesehen sind.

16. Deponie-Abdichtung nach einem der Ansprüche
11 bis 15,
dadurch **gekennzeichnet** ,
daß die Glaselemente (4) auf einer Gewebeschicht (13) insbesondere Geotextil-Schicht verlegt sind.

17. Deponie-Abdichtung nach einem der Ansprüche
11 bis 16,
dadurch **gekennzeichnet** ,
daß die Deponie-Oberfläche, auf der die Oberflächen-Dichtung (20) vorgesehen ist, geneigte Flächen aufweist.

18. Deponie-Abdichtung nach Anspruch 17,
dadurch **gekennzeichnet** ,
daß die Deponie-Oberfläche geometrisch ausgebildet ist.

19. Deponie-Abdichtung nach Anspruch 16 oder 17,
dadurch **gekennzeichnet** ,
daß bei einem im wesentlichen waagerechten
Deponie-Oberflächenabschnitt (16) ein Dachprofil (17,18) ausgebildet ist.

20. Deponie-Abdichtung nach einem der Ansprüche
11 bis 19,
dadurch **gekennzeichnet** ,
daß bei mehrlagiger Anordnung die Glaselemente (4'), die benachbarten Lagen zugeordnet sind,
fugenversetzt angeordnet sind.

# FIG. 1

# FIG. 3

FIG. 2

# FIG. 4

# FIG. 5

FIG. 6

FIG. 7

FIG. 8

FIG. 9

FIG. 10

FIG. 11

EP 0 517 229 A1

**Europäisches Patentamt**

**EUROPÄISCHER RECHERCHENBERICHT**

Nummer der Anmeldung

EP 92 10 9495

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 292 941 (DYCKERHOFF & WIDMANN)<br>* Spalte 2, Zeile 18 - Zeile 28; Abbildung 1 *<br>--- | 1,11 | E02D31/00<br>B09B1/00 |
| A | DE-A-3 724 882 (REINHARDT)<br><br>* Spalte 1, Zeile 56 - Spalte 2, Zeile 38; Abbildungen 1,2 *<br>--- | 1-4,11,<br>12 | |
| A | EP-A-0 298 283 (FLACHGLAS)<br><br>* Spalte 2, Zeile 1 - Spalte 3, Zeile 39 *<br>* Spalte 4, Zeile 41 - Spalte 6, Zeile 35; Abbildungen 1-7 *<br>--- | 1-3,6,8,<br>13 | |
| A | DE-A-3 919 327 (HOLZMANN)<br>--- | | |
| A | EP-A-0 425 950 (FLACHGLAS)<br><br>----- | | |
| | | | **RECHERCHIERTE SACHGEBIETE (Int. Cl.5)**<br><br>E02D<br>B09B<br>G21F |

Der vorliegende Recherchenbericht wurde für alle Patentansprüche erstellt

| Recherchenort | Abschlußdatum der Recherche | Prüfer |
|---|---|---|
| DEN HAAG | 23 SEPTEMBER 1992 | BELLINGACCI F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

11